# EUROPÄISCHE PATENTSCHRIFT

(11) **EP 3 450 931 B1**
(45) Veröffentlichungstag und Bekanntmachung des Hinweises auf die Patenterteilung: **05.10.2022**
(21) Anmeldenummer: 17188089.1
(22) Anmeldetag: 28.08.2017
(51) Int. Cl.: G01F 23/284, G01S 7/03, G01S 13/88, H01Q 1/22, H01Q 13/02

(54) **HOHLLEITEREINKOPPLUNG FÜR EIN FÜLLSTANDRADAR**
HOLLOW LINE COUPLING FOR A FILL LEVEL RADAR
COUPLAGE D'UN GUIDE D'ONDE POUR UN RADAR DE NIVEAU DE REMPLISSAGE

(43) Veröffentlichungstag der Anmeldung: 06.03.2019
(73) Patentinhaber: VEGA Grieshaber KG, 77709 Wolfach (DE)
(72) Erfinder: SCHULTHEIß, Daniel, 78132 Hornberg (DE); MÜLLER, Christoph, 77728 Oppenau (DE); BAUR, Roland, 78126 Königsfeld (DE)
(74) Vertreter: Maiwald Patent- und Rechtsanwaltsgesellschaft mbH

(56) Entgegenhaltungen:
- EP-A1- 0 884 567
- EP-A2- 0 296 838
- DE-A1-102015 111 595
- DE-A1-102015 119 690
- US-A- 3 778 717
- US-A1- 2004 056 667

## Beschreibung

### Gebiet der Erfindung

Die Erfindung betrifft die Füllstandmessung mit Füllstandmessgeräten, die nach dem Laufzeitverfahren arbeiten. Insbesondere betrifft die Erfindung eine Hohlleitereinkopplung für ein Füllstandradar, ein Hochfrequenz-Radarmodul für ein Füllstandradar und ein Füllstandradar mit einem solchen Hochfrequenz-Radarmodul.

### Hintergrund

Zur Messung des Füllstands eines Mediums in einem Behälter können Mikrowellensignale in die Richtung der Oberfläche ausgestrahlt und die dort reflektierten Signale vom Messgerät empfangen werden. Aus der Zeit zwischen dem Absenden der Signale und dem Empfangen der reflektierten Signale (Laufzeit) lässt sich der Abstand zwischen dem Messgerät und der Oberfläche des Mediums und daraus über bekannte Größen des Messaufbaus der Füllstand ermitteln. Daher wird das Messverfahren auch als Laufzeit- oder Radar-Verfahren bezeichnet. Die Mikrowellensignale können kontinuierlich oder pulsweise erzeugt und abgestrahlt werden.

Derartige Füllstandmessgeräte verfügen üblicherweise über einen Hochfrequenzchip, der die Mikrowellensignale erzeugt und verarbeitet, und ein Antennenelement, das die Mikrowellensignale abstrahlt.

Die abzustrahlenden Mikrowellensignale, im Folgenden auch als hochfrequente Sendesignale bezeichnet, werden über eine HF-Signalleitung an das Antennenelement übermittelt.

DE 10 2015 119 690 A1 beschreibt einen radarbasierten Füllstandsensor mit einem Halbleiterelement, umfassend mindestens einen Halbleiterchip und ein Chipgehäuse, in dem der mindestens eine Halbleiterchip angeordnet ist, wobei der mindestens eine Halbleiterchip mindestens ein Koppelelement aufweist, das als Signaltor für elektromagnetische Wellen, bevorzugt im Millimeterwellenbereich, dient, wobei an einer Teiloberfläche des Chipgehäuses mindestens eine erste Resonatorstruktur angeordnet ist.

US 2004/0056667 A1 beschreibt ein Füllstandradargerät mit einem Mikrowellengenerator, der außerhalb des Hohlleiters angeordnet ist und einem Strahlerelement, das innerhalb des Hohlleiters angeordnet ist.

US 3,778,717 A1 beschreibt einen Festkörperoszillator, bei dem ein Oszillatorelement, ein Resonator und ein Radiator für die elektromagnetischen Wellen in einem Bauteil implementiert sind.

### Zusammenfassung der Erfindung

Es ist eine Aufgabe der Erfindung, ein vorteilhaftes Füllstandradar bereitzustellen, das nach dem Laufzeitverfahren arbeitet.

Diese Aufgabe wird durch die Gegenstände der unabhängigen Ansprüche gelöst. Weiterbildungen der Erfindung ergeben sich aus den Unteransprüchen und der nachfolgenden Beschreibung von Ausführungsformen.

Ein erster Aspekt der Erfindung betrifft eine Hohlleitereinkopplung für ein Füllstandradar, welche einen Hohlleiter und einen Hochfrequenzchip aufweist, der zumindest teilweise in dem Hohlleiter angeordnet ist und der Erzeugung eines hochfrequenten Sendesignals dient. Der Hochfrequenzchip weist ein Koppelelement zum Einkoppeln des Sendesignals in den Hohlleiter auf.

Bei dem Koppelelement kann es sich beispielsweise um einen Einkoppelstift in Form eines metallischen Stifts (durch Metallisierungsstruktur (z.B. Leitungsstück) handeln. Auch kann das Koppelelement in Form einer Finne oder einer Patchantenne ausgeführt sein. Der Chip mit Koppelelement sitzt zumindest teilweise im Hohlleiter.

Bond-Verbindungen zur Verbindung des Hochfrequenzchips mit dem Koppelelement sind nicht erforderlich. Insbesondere ist es nicht erforderlich, dass das erzeugte Hochfrequenzsignal des Mikrowellenchips auf eine Leiterplatte überführt wird, bevor es dann an ein Antennenelement übertragen wird. Auch eine direkte Bondverbindung zwischen Chip und Antennenelement ist nicht erforderlich.

Durch die Integration des Koppelelements in den Hochfrequenzchip können darüber hinaus Signalwege verkürzt werden, so dass die Länge der Zuführung vom Hochfrequenzchip zum Koppelelement eine möglichst geringe Einfügedämpfung aufweist, so dass negative Einflüsse auf die Empfindlichkeit des Radarsystems minimiert werden können.

Da das Mikrowellensignal direkt vom HF-Chip in den Hohlleiter eingekoppelt wird (das Koppelelement ist ja Bestandteil des Hochfrequenzchips) kann auf nachteilige Signalverbindungen verzichtet werden.

Gemäß einer Ausführungsform der Erfindung ist das Koppelelement auf der Oberseite des Hochfrequenzchips angeordnet. Gemäß einer weiteren Ausführungsform der Erfindung ist das Koppelelement auf der Unterseite des Hochfrequenzchips angeordnet.

Beide Ausführungsformen weisen teilweise unterschiedliche Vorteile auf. Beispielsweise ist im letzteren Fall das Koppelelement mechanisch besser geschützt. Sitzt das Koppelelement auf der Oberseite des Chips, kann das Mikrowellensignal ungehindert in das darüber liegende Medium abgestrahlt werden. Es gibt keine Dämpfung durch beispielsweise das Chip-Material. Außerdem befindet sich das Koppelelement in diesem Fall auf der gleichen Chip-Seite wie der hochfrequente Schaltungsteil des Chips. Somit sind keine aufwendigen Verbindungen innerhalb des Chips zu realisieren.

Gemäß der Erfindung weist die Hohlleitereinkopplung ein Substrat auf, auf dem der Hochfrequenzchip angebracht ist. Das Substrat ist darüber hinaus an dem Hohlleiter befestigt, so dass sich ein sehr stabiler Aufbau ergibt.

Gemäß der Erfindung weist der Hohlleiter einen Resonatorraum oder Resonanzraum auf, der durch eine Ausnehmung des Substrats ausgebildet ist. Typischerweise sind die Wände des Resonatorraumes metallisiert und es kann vorgesehen sein, dass der Resonatorraum zumindest teilweise mit einem Dielektrikum gefüllt ist. Insbesondere kann vorgesehen sein, dass sich das Dielektrikum nur unterhalb des Koppelelements befindet. Auch kann das Koppelelement in dem Dielektrikum eingebettet sein.

Gemäß einer weiteren Ausführungsform der Erfindung weist die Hohlleitereinkopplung ein Antennenhorn auf, das an das Ende des Hohlleiters angebracht ist. Der Hochfrequenzchip ist beispielsweise auf dem Substrat aufgeklebt. Ein weiterer Aspekt der Erfindung betrifft ein Hochfrequenz-Radarmodul für ein Füllstandradar, das eine oben und im Folgenden beschriebene Hohlleitereinkopplung aufweist.

Ein weiterer Aspekt der Erfindung betrifft ein Füllstandradar mit dem oben und im Folgenden beschriebenen Hochfrequenz-Radarmodul.

Im Folgenden werden mit Verweis auf die Figuren Ausführungsformen der Erfindung beschrieben. Werden in der folgenden Figurenbeschreibung die gleichen Bezugszeichen verwendet, so bezeichnen diese gleiche oder ähnliche Elemente. Die Darstellungen in den Figuren sind schematisch und nicht maßstäblich.

### Kurze Beschreibung der Figuren

Fig. 1 zeigt eine Hohlleitereinkopplung.
Fig. 2 zeigt eine Hohlleitereinkopplung gemäß einer Ausführungsform der Erfindung.
Fig. 3 zeigt ein Füllstandmesssystem gemäß einer Ausführungsform der Erfindung.
Fig. 4 zeigt einen Hochfrequenzchip mit einem Koppelelement gemäß einer Ausführungsform der Erfindung.

### Detaillierte Beschreibung

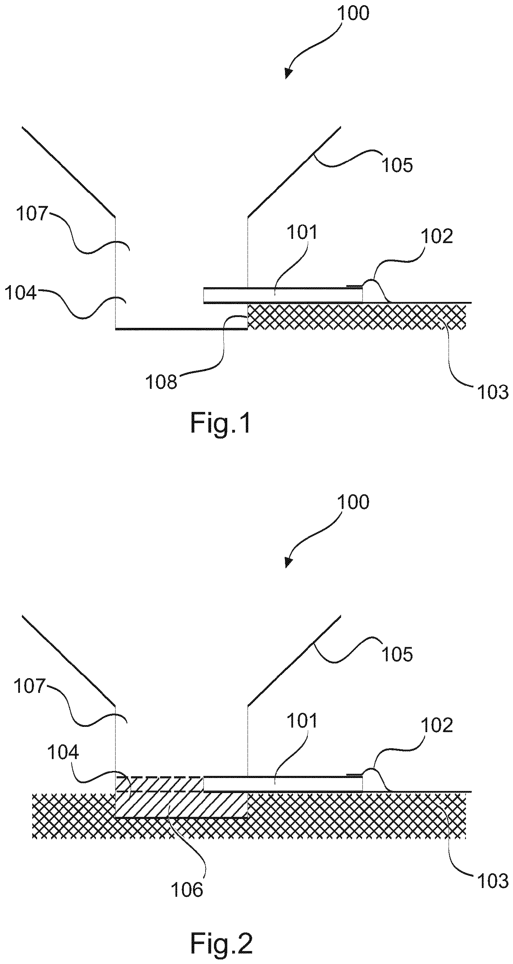

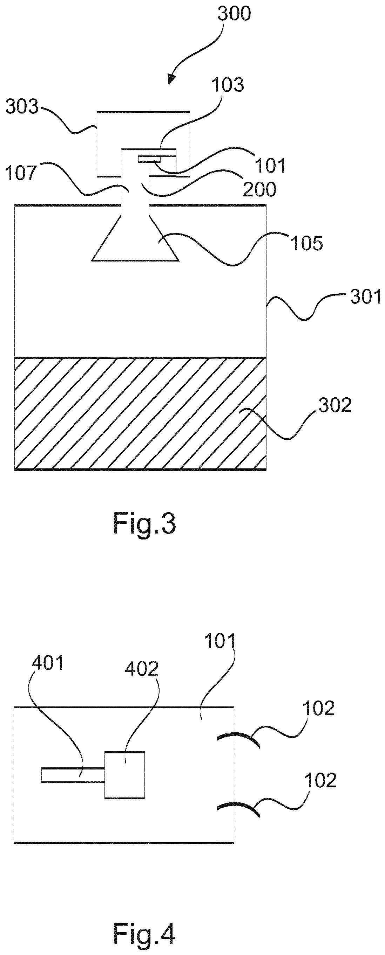

Fig. 1 zeigt eine Hohlleitereinkopplung 100 für ein Füllstandradar 200 (vgl. Fig. 3). Der Hochfrequenzchip 101 ist auf einem Substrat 103, beispielsweise einer Leiterplatte 103, einem Keramikträger 103 oder Metallplatte 103, angeordnet und über Bonddrähte 102 an die Energieversorgung angeschlossen. Über diese Bonddrähte können auch Steuersignale übertragen werden. Jedoch dienen die Bonddrähte nicht zur Übertragung von hochfrequenten Mikrowellensignalen.

Der Hochfrequenzchip 101 ragt zumindest teilweise in den Resonatorraum oder Resonanzraum 104 des Hohlleiters 107 hinein. An seiner Unterseite ist der Hohlleiter 107 abgeschlossen, so dass er einen Resonanzraum 104 ausbildet. Der Resonanzraum 104 ist zwischen dem Koppelelement, das sich auf der Ober- oder Unterseite des Substrats 103 befindet, und dem unteren, abgeschlossenen Ende des Hohlleiters 107 ausgebildet. Am anderen Ende des Hohlleiters ist eine Hornantenne 105 angeschlossen, über welche das HF-Sendesignal in Richtung Füllgutoberfläche abgestrahlt wird. Eine Linse zur Signalbündelung kann ebenso vorgesehen sein.

In der nicht erfindungsgemäßen Ausführungsform der Fig. 1 befindet sich der Resonanzraum 104 des Hohlleiters 107 neben dem Substrat 103, auf dem der Hochfrequenzchip 101 angeordnet ist. Der Hochfrequenzchip 101 erstreckt sich über die Abschlusskante 108 des Substrats 103 hinaus und ragt in den Hohlleiter 107 hinein. Auf der Oberseite oder auf der Unterseite des Hochfrequenzchips ist das Koppelelement 401 angeordnet (vgl. Fig. 4), über welches das HF-Sendesignal abgestrahlt wird. Es kann vorgesehen sein, dass über dieses Koppelelement auch das an der Füllgutoberfläche reflektierte Sendesignal empfangen wird.

Das Hochfrequenz-Sendesignal (Mikrowellensignal) wird direkt vom Chip über das Koppelelement 401 in den Hohlleiter eingekoppelt. Der Wegfall einer HF-Signalübertragung vom Mikrowellenchip auf ein anderes Medium (beispielsweise eine Leiterplatte (PCB), abgesetzte Finne, abgesetzter Stift) resultiert in verbesserten Signalübertragungseigenschaften. Das "Klingeln", bei dem es sich um einen Effekt im Nahbereich der Antenne handelt, welcher zu ungenauen Entfernungsmessungen im Nahbereich der Antenne führen kann, wird durch die direkte und vereinfachte Einkopplung deutlich reduziert. Die Empfindlichkeit des Systems wird durch die verringerte Einfügedämpfung verbessert. Auch die Aufbautechnik wird vereinfacht, da die anspruchsvolle HF-Signalübertragung ohne Verbindungstechnik auskommt. Im Gegensatz zu einer Antenna-on-Chip-Lösung hat diese Anordnung den Vorteil, dass die Antenne über den Hohlleiter 107 abgesetzt werden kann, also einen Abstand zum Substrat aufweist. Bei Anwendungen mit hohen Temperaturen kann dadurch die Elektronik weiter weg von der Antenne platziert werden.

In anderen Worten ist eine direkte Einkopplung des Mikrowellensignals vom Chip in den Hohlleiter vorgesehen, wobei das Koppelelement selbst Bestandteil des Hochfrequenz-Chips ist und zumindest teilweise in den Hohlleiter hineinragt. Auf der Chip-Fläche wird ein Einkoppelstift 401 realisiert, wie dies in der Fig. 4 dargestellt ist. Darum herum und darüber wird der Hohlleiter angeordnet. Der Chip befindet sich zumindest teilweise, möglicherweise aber auch komplett, innerhalb des Hohlleiters. Anstelle eines Einkoppelstifts kann auch ein kleines Patch verwendet werden, also ein flächiges Strahlerelement.

Der Resonatorraum 104 unterhalb des Chips kann ungefüllt sein, wie dies in der Fig. 1 gezeigt ist, oder er ist mit einem Dielektrikum 106 gefüllt sein, wie dies in der Fig. 2 zu sehen ist. Der Koppelstift ist üblicherweise auf der Oberseite des Chips Bestandteil dessen Layouts. Er kann sich auch auf der Unterseite des Chips befinden. In diesem Fall ist das Layout des Chips und der weitere Aufbau entsprechend ausgelegt.

Der Resonatorraum selbst kann in das Substrat 103, bei dem es sich um eine Leiterplatte oder dergleichen handelt, integriert sein, wie dies in der Fig. 2 gezeigt ist. In diesem Fall bildet das Substrat 103 eine Ausnehmung (cavity) aus, in welche der Hohlleiter 107 eingesetzt ist.

Der HF-Chip selbst kann auf dem Substrat aufgeklebt sein und per Bonding-Technologie elektrisch an die Energieversorgung und zur Entgegennehme von Steuerungssignalen kontaktiert sein. Alternative Kontaktierungen sind möglich, beispielsweise durch Einbetten des Chips in ein Trägermaterial und elektrischen Anschluss über eine strukturierte Metallisierungsebene. Der Chip ist dabei komplett durch ein Material (z.B. Kunststoff) eingebettet. Die Oberfläche ist mit einer Metallisierungslage versehen, in der sich die Anschlussleitungen befinden. Auch ist es möglich, eine Linse zur Signalbündelung über der gesamten Anordnung anzubringen.

Die oben beschriebene Art der Einspeisung kann auch zur Erregung anderer Antennentypen verwendet werden.

Die abgebildeten Bonddrähte 102 dienen nur der Versorgung des Chips mit Energie und anderen Signalen. Sie führen keine Mikrowellensignale.

Fig. 3 zeigt einen Messaufbau mit einem Behälter 301, in dem sich Füllgut 302 befindet. Oben an dem Behälter ist ein Füllstandmessgerät 300 angebracht, welches ein Hochfrequenzradarmodul 200 mit der oben beschriebenen Hohlleitereinkopplung aufweist. Am Ende der Hornantenne 105 kann eine dielektrische Linse 108 angebracht sein. Zusätzlich oder alternativ zur Linse 108 kann eine gasdichte Prozessabdichtung 109 innerhalb des Hohlleiters vorgesehen sein, um den Chip von der Behälteratmosphäre zu isolieren.

Fig. 4 zeigt eine Draufsicht auf einen Hochfrequenzchip 101 mit einer Hochfrequenzsignalerzeugungseinheit 402, an die ein Koppelelement 401 angeschlossen ist.

Dargestellt ist eine Hochfrequenzsignalerzeugungseinheit mit einem Koppelelement in Form eines Stiftes (Leitungsstück). Alternativ kann ein einzelnes Patch oder auch ein Patch-Array vorgesehen sein.

Ergänzend sei daraufhingewiesen, dass "umfassend" und "aufweisend" keine anderen Elemente oder Schritte ausschließt und die unbestimmten Artikel "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Hohlleitereinkopplung (100) für ein Füllstandradar (300), aufweisend:
einen Hohlleiter (107);
einen Hochfrequenzchip (101), der zumindest teilweise in dem Hohlleiter angeordnet ist, zur Erzeugung eines hochfrequenten Sendesignals;
wobei der Hochfrequenzchip ein Koppelelement (401) zum Einkoppeln des Sendesignals in den Hohlleiter aufweist;
ein Substrat (103), auf dem der Hochfrequenzchip (101) angebracht ist;
wobei das Substrat an dem Hohlleiter (107) angebracht ist;
**dadurch gekennzeichnet dass** der Hohlleiter (107) einen Resonatorraum (104) aufweist, der in eine Ausnehmung des Substrats (103) integriert ist und dass der Hohlleiter (107) in der Ausnehmung eingesetzt ist.

2. Hohlleitereinkopplung nach Anspruch 1,
wobei das Koppelelement (401) als Einkoppelstift ausgeführt ist.

3. Hohlleitereinkopplung nach einem der vorhergehenden Ansprüche,
wobei das Koppelelement (401) auf der Oberseite des Hochfrequenzchips (101) angeordnet ist.

4. Hohlleitereinkopplung nach einem der Ansprüche 1 oder 2,
wobei das Koppelelement (401) auf der Unterseite des Hochfrequenzchips (101) angeordnet ist.

5. Hohlleitereinkopplung nach einem der vorhergehenden Ansprüche
wobei der Resonatorraum (104) mit einem Dielektrikum (106) gefüllt ist.

6. Hohlleitereinkopplung nach einem der vorhergehenden Ansprüche, weiter aufweisend:
ein Antennenhorn (105), das an das Ende des Hohlleiters (107) angebracht ist.

7. Hohlleitereinkopplung nach einem der vorhergehenden Ansprüche,
wobei der Hochfrequenzchip (101) auf dem Substrat (103) aufgeklebt ist.

8. Hochfrequenz-Radarmodul (200) für ein Füllstandradar, aufweisend:
Hohlleitereinkopplung (100) nach einem der vorhergehenden Ansprüche.

9. Füllstandradar (300) mit einem Hochfrequenz-Radarmodul (200) nach Anspruch 8.

## Claims

1. Waveguide coupling (100) for a fill level radar (300), comprising:
a waveguide (107);
a high-frequency chip (101), which is arranged at least partially in the waveguide, for generation of a high-frequency transmission signal;
wherein the high-frequency chip comprises a coupling element (401) for coupling the transmission signal into the waveguide,
a substrate (103), on which the high-frequency chip (101) is mounted, wherein the substrate is mounted on the waveguide (107),
**characterized in that** the waveguide (107) comprises an resonator chamber (104) which is integrated in a cavity in the substrate (103) and that the waveguide (107) is inserted in the cavity.

2. Waveguide coupling according to claim 1,
wherein the coupling element (401) is designed as a coupling pin.

3. Waveguide coupling according to one of the preceding claims,
wherein the coupling element (401) is arranged on the upper side of the high-frequency chip (101).

4. Waveguide coupling according to one of the claims of 1 or 2,
wherein the coupling element (401) is arranged on the lower side of the high-frequency chip (101).

5. Waveguide coupling according to one of the preceding claims,
wherein the resonator chamber (104) is filled with a dielectric (106).

6. Waveguide coupling according to one of the preceding claims, further comprising:
an antenna horn (105) that is mounted on an end of the waveguide (107).

7. Waveguide coupling according to one of the preceding claims,
wherein the high-frequency chip (101) is paste up on the substrate (103).

8. High-frequency radar module (200) for a fill level radar, comprising:
waveguide coupling (100) according to one of the preceding claims.

9. Fill level radar (300) with a high-frequency radar module (200) according to claim 8.

## Revendications

1. Couplage de guide d'ondes (100) pour un radar de niveau de remplissage (300), comportant :
un guide d'ondes (107) ;
une puce à haute fréquence (101) qui est disposée au moins en partie dans le guide d'ondes pour générer un signal de transmission à haute fréquence ;
dans lequel la puce à haute fréquence comporte un élément de couplage (401) pour coupler le signal de transmission dans le guide d'ondes ;
un substrat (103) sur lequel la puce à haute fréquence (101) est rapportée ;
dans lequel le substrat est rapporté sur le guide d'ondes (107) ;
**caractérisé en ce que** le guide d'ondes (107) comporte une chambre de résonance (104) qui est intégrée dans une cavité du substrat (103) et **en ce que** le guide d'ondes (107) est inséré dans la cavité.

2. Couplage de guide d'ondes selon la revendication 1,
dans lequel l'élément de couplage (401) est réalisé sous la forme d'une broche de couplage.

3. Couplage de guide d'ondes selon l'une des revendications précédentes,
dans lequel l'élément de couplage (401) est disposé sur la face supérieure de la puce à haute fréquence (101).

4. Couplage de guide d'ondes selon l'une des revendications 1 ou 2,
dans lequel l'élément de couplage (401) est disposé sur la face inférieure de la puce à haute fréquence (101).

5. Couplage de guide d'ondes selon l'une des revendications précédentes,
dans lequel la chambre de résonance (104) est remplie d'un diélectrique (106).

6. Couplage de guide d'ondes selon l'une des revendications précédentes, comportant en outre :
une antenne cornet (105) qui est rapportée à l'extrémité du guide d'ondes (107).

7. Couplage de guide d'ondes selon l'une des revendications précédentes,
dans lequel la puce à haute fréquence (101) est collée sur le substrat (103).

8. Module radar à haute fréquence (200) pour un radar de niveau de remplissage, comportant :
un couplage de guide d'ondes (100) selon l'une des revendications précédentes.

9. Radar de niveau de remplissage (300) comportant un module radar à haute fréquence (200) selon la revendication 8.
